(19) Europäisches Patentamt
European Patent Office
Office européen des brevets

(11) **EP 1 906 054 A1**

(12) **EUROPEAN PATENT APPLICATION**
published in accordance with Art. 153(4) EPC

(43) Date of publication:
02.04.2008 Bulletin 2008/14

(51) Int Cl.:
*F16H 49/00* (2006.01)

(21) Application number: 06780954.1

(22) Date of filing: 11.07.2006

(86) International application number:
PCT/JP2006/313732

(87) International publication number:
WO 2007/010780 (25.01.2007 Gazette 2007/04)

(84) Designated Contracting States:
DE

(30) Priority: 20.07.2005 JP 2005209857
07.11.2005 JP 2005321747

(71) Applicant: SHOEI ENGINEERING LTD
Ohsaki City Miyagi, 9871305 (JP)

(72) Inventor: KURITANI, Kingo
Ohsaki City Miyagi 9896135 (JP)

(74) Representative: HOFFMANN EITLE
Patent- und Rechtsanwälte
Arabellastrasse 4
81925 München (DE)

(54) **POWER TRANSMISSION MECHANISM**

(57) [Problem to be solved] With magnetic orthogonal power transmission mechanisms made from cylinders, magnetically meshing parts make point meshing. This means that the transmission torque is small and possible applications are limited. A magnetic orthogonal non-contact power transmission mechanism and power transmission apparatus are therefore provided to reinforce drive torque and increase transmission torque.

[Solution] In an orthogonal magnetic transmission mechanism adopting a cylinder for one part and adopting a disc structure for a remaining part, magnetically meshing parts make line meshing (ridge lines). Transmission torque can therefore be substantially strengthened and smooth rotation is possible by adopting a structure where a plurality of magnetically meshing parts occur consecutively.

FIG.1

**Description**

TECHNICAL FIELD

The present invention relates to a power transmission mechanism that transmits power in a non-contact manner to a part that transmits rotational power using magnetic meshing of permanent magnets.

BACKGROUND ART

Non-contact power transmission mechanisms that transmit power in a non-contact manner using magnetic force of permanent magnets are well-known as typical methods of transmitting power from a drive shaft to a driven shaft when one of two rotating axes is taken as a drive shaft and the other is taken as a driven shaft.

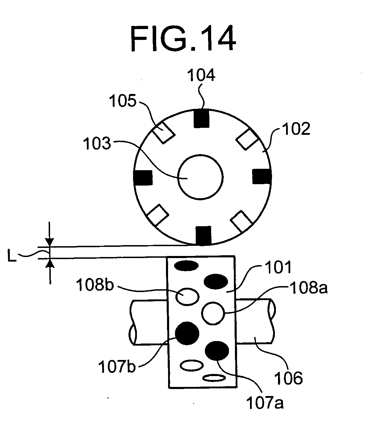

For example, a structure where two magnetic gear shafts with N-poles and S-poles arranged alternately at outer peripheries of discs transmit power when orthogonal to each other as shown in Fig. 14 is well-known. This structure and its mechanism is now described based on the drawings. As shown in Fig. 14, in this structure, a rotatable shaft 103 as a drive gear to which a second magnetic gear 102 is fitted drives another rotatable shaft 106 as a driven gear to which a first magnetic gear 101 fitted. N-poles 104 and S-poles 105 are arranged alternatively at the outer periphery of the second magnetic gear 102. N-poles 107a, 107b and S-poles 108a, 108b are arranged alternatively in a shifted manner at the outer periphery of the first magnetic gear 101. When the second magnetic gear 102 begins rotating due to the rotation of the rotatable shaft 103, one of the N-poles 104 of the second magnetic gear 102 and a first S-pole 108a of two S-poles 108a and 108b on the first magnetic gear 101 are attracted to each other. As the second magnetic gear 102 rotates further, the rotatable shaft 106 rotates due to the rotation of the first magnetic gear 101 by attraction of the next S-pole 108b to the N-poles 104 because of the angular difference between the two S-poles 108a, 108b. Continuous rotation then takes place as a result of attraction between one of the S-poles 105 and the two N-poles 107a and 107b. In the mechanism, the magnetic meshing as a result of magnetic attraction and repulsion mesh is a point meshing. There are therefore the drawbacks that smooth power transmission is not possible because the drive torque is weak and transmission torque pulses are unavoidable. Furthermore, a drive apparatus where axial centers of a substantially axis-shaped magnetic drive member and a substantially conical-shaped or regular pyramid-shaped magnetic driven member intersect at right-angles or at an incline are well-known (refer to patent document 3). However, even this mechanism does not solve the problems of insufficient drive torque and transmission torque pulses.

[Patent Document 1]
Japanese Patent Laid-open Publication No. H11-55932.
[Patent Document 2]
Japanese Patent Laid-open Publication No. H2005-114162.
[Patent Document 3]
Japanese Patent No. 2648565.

DISCLOSURE OF INVENTION

PROBLEM TO BE SOLVED BY THE INVENTION

In the above-described mechanisms, the magnetic meshing as a result of magnetic attraction and repulsion mesh is a point meshing. There are therefore the drawbacks that smooth power transmission is not possible because the drive torque is weak and transmission torque pulses are unavoidable. In order to resolve this kind of situation, it is an object to provide a non-contact power transmission mechanism and power transmission apparatus that provides strong drive torque and suppresses transmission torque pulses. In patent document 3, embodiments are disclosed where the magnetic meshing is a line meshing. However, a large number of problems reside in this mechanism. Those problems are irregular rotation (pulses) during rotation is not prevented, only ways of use restrictive to the drive side and the driven side were possible, and the like.

MEANS FOR SOLVING PROBLEM

In order to resolve the described problems, the present invention provides a magnetic disc and a magnetic cylinder. The magnetic disc is arranged with radially curving permanent magnets at one disc-shaped flat surface that are a magnetic gear that transmits power on one side. The magnetic cylinder that is a permanent magnet cylinder is magnetized so that a magnetic gear of the other side is skewed spirally to a cylinder-shaped outer periphery surface.

The axial center of the cylinder is arranged substantially parallel to the plane in a non-contact state. The magnetically meshing parts that are the transmission source of this power transmission then make a line meshing in a consecutive manner.

At the magnetic disc or magnetic cylinder, it is also possible for curves defining the magnetic poles appearing at the surface to have a width. In this case, the curves having the width form this surface but this surface is, for example, a switching region for magnetic poles or a gap region when arranging magnets of different polarities. Further, at the magnetic disc, it is preferable for the width to be a fixed width in a radial direction of the magnetic disc (so that a length of a straight line drawn in a radial direction from the center of the magnetic disc including a curve having the width becomes a fixed length regardless of angle). It is therefore possible to make the length of a magnetic pole switching region occurring at a part where the magnetic disc and the magnetic cylinder magnetically mesh fixed regardless of rotation angle and this enables stable power transmission.

With regards to the structure of the curves defining the magnetic poles of the present invention, with the magnetic disc, it is possible to make magnetic pole shapes appearing at the surface: by magnetization; by making magnets of shapes encompassed by curves defining magnetic poles; or by using a combination of magnetization and magnets.

EFFECT OF THE INVENTION

The present invention provides a non-contact orthogonal power transmission mechanism that enables extremely smooth power transmission without pulsations, implements substantial transmission torque and that can be broadly applied to power transmission apparatus with annoying vibration and dust generation by adopting power transmission due to non-contact magnetic meshing of a magnetic disc having permanent magnets magnetized in the shape of radial curves on one side and a magnetic cylinder having permanent magnets magnetized in a skewed manner spirally at an outer periphery surface. Furthermore, the magnetic cylinder can be a driving member and the magnetic disc can be a driven member, or conversely for the magnetic disc to be a driving member and the magnetic cylinder to be a driven member. This gives a power transmission mechanism with a broader field of application.

BEST MODE(S) FOR CARRYING OUT THE INVENTION

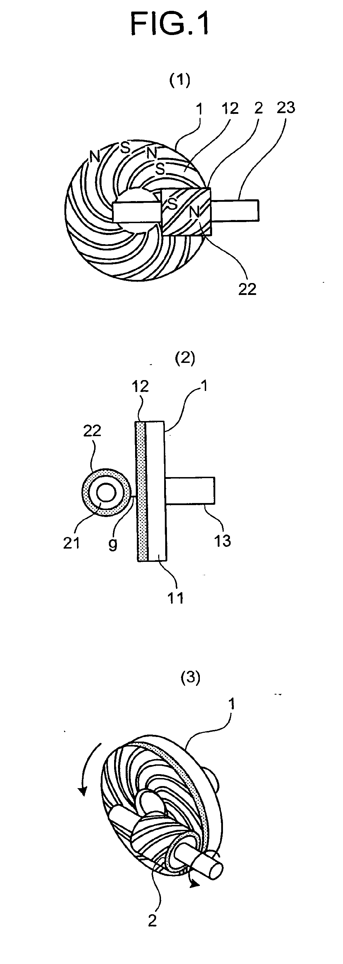

Fig. 1 depicts a first embodiment of a non-contact orthogonal power transmission mechanism of the present invention, where (1) is a front view, (2) is a right-side view, and (3) is a perspective view.

A magnetic cylinder 1 is arranged at a magnetic surface side of a disc magnet 12 of a magnetic disc 1 with a certain gap "g" therebetween. The length in an axial direction of the magnetic cylinder 1 is substantially the same as the width in a radial direction of the disc magnet 12. The magnetic cylinder 1 is arranged so that its axis is substantially parallel with a magnet surface (first magnetic surface) of the disc magnet 12 and maintains the same gap "g" in the axial direction.

The magnetic disc 1 includes a yoke disc 11, the permanent disc magnet 12, and a rotatable shaft 13. The yoke disc 11 is made of magnetic material. The permanent disc magnet 12 is fitted to one side of the yoke disc 11. The rotatable shaft 13 is fixed by press-fitting etc. in a hole at the center of the yoke disc 11. Magnetic teeth (magnetic bands) in the shape of radiating curves alternating in polarity with respect to the direction of rotation are magnetized at the permanent disc magnet 12 using an appropriate method such as, for example, a method described later.

On the other hand, the magnetic cylinder 2, which is the other part of one magnetic transmission, includes a yoke cylinder 21, a permanent magnet cylinder 22, and a rotatable shaft 23. A central part of the yoke cylinder 21 is formed from, for example, magnetic material. The permanent magnet cylinder 22 is fitted at the outer periphery of the yoke cylinder. The rotatable shaft 23 is fixed by press-fitting etc. in a hole at the center of the magnetic cylinder 2. The permanent magnet cylinder 22 has helical strip-shaped magnetic bands alternately polarized as N-poles and S-poles. The magnetic bands constitute a second magnetic surface.

Next, an explanation is given of an orthogonal magnetic transmission mechanism made using the magnetic disc 1 and the magnetic cylinder 2. As shown in Fig. 1, the non-contact orthogonal power transmission mechanism is made so that the rotatable shaft 13 of the magnetic disc 1 and the rotatable shaft 23 of the magnetic cylinder 2 are arranged orthogonally with respect to each other and a specific gap is provided between the surfaces of their respective permanent magnets. (a structure that fixes the magnetic disc 1 and the magnetic cylinder 2 is not specifically shown in the drawings)

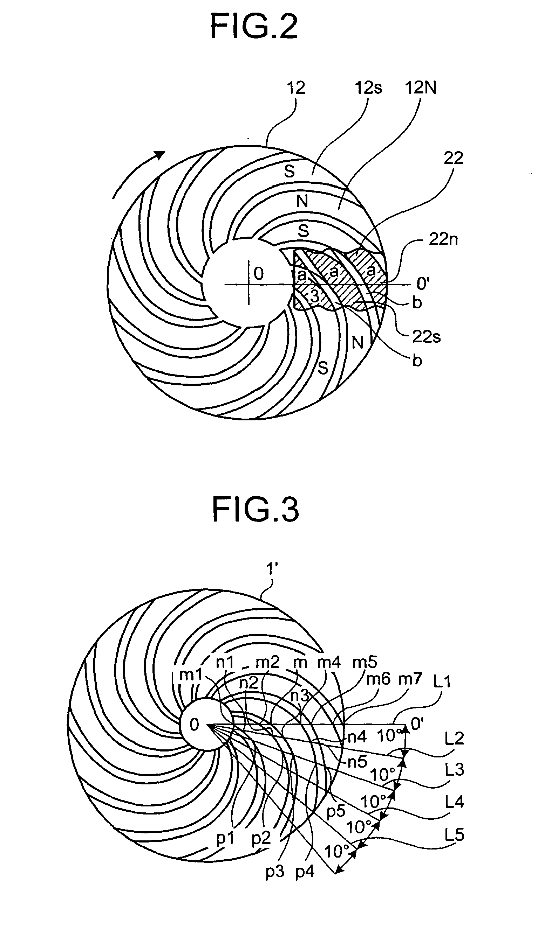

Next, an explanation is given of the theory of this rotation by referring to the drawings. Fig. 2 is an outline view showing magnetic polarity of opposing surfaces of the permanent magnet 12 of the magnetic disc 1 and the permanent magnet 22 of the magnetic cylinder 2 of Fig. 1(1). As shown in Fig. 2, magnetic teeth 12N and 12S are alternately magnetized as curved shapes radiating from the center of the permanent magnet 12. On the other hand, the magnetic teeth forming a slanted line of the magnetic cylinder 2 are forming by magnetizing such that a magnetic tooth length, which is the distance between points of intersection of adjoining magnetic teeth 22n, 22s and a straight line 0-0' is "a" and a pitch between the adjoining magnetic teeth 22n, 22s is "b" with a helix angle (skew angle). Next, similarly, for the magnetic disc 1 facing the magnetic teeth of the magnetic cylinder 2, lengths of lines for the magnetic teeth between points where a straight line linking the center O and O' intersects with the magnetic teeth 12N, 125... of the magnetic disc 1 are all taken to be substantially "a". The shape of the magnetic teeth is then set in such a manner that a gap for between the magnetic teeth becomes substantially "b", and matches with the gap for the magnetic disc 2. However, the dimensions of the innermost periphery and the outermost periphery are respectively equivalent to or less than the lengths "a" and "b".

Next, an explanation is given based on Fig. 3 of an example of a method of forming the magnetic teeth shapes of the magnetic disc 1 with the magnetic disc 1 taken as the drive side and the magnetic cylinder 2 taken as the driven side. Fig. 3 depicts a magnetic disc 1' formed with magnetic teeth conforming to Fig. 2. In Fig. 3, a horizontal line L1 originating at the center O of the magnetic disc 1' and ending at the point O' is rotated, for example, by 10 degrees, at a time in the clockwise direction thereby obtaining reference lines L2, L2, L3, L4, L5. In Fig. 3, as described previously for Fig. 2, a point m1, a point m2 shifted a distance "a" towards the outer periphery, a point m3 further shifted a distance "b" towards the outer periphery, a point m4 similarly shifted by the distance "a", a point m5 shifted by the same distance "b", and a point m6 further shifted by the distance "a" are inscribed in order from the inner periphery of the magnetic disc 1' on the horizontal line L1. Points n1, n2, n3, ... corresponding to the points m1, m2, m3, ... fall on the reference line L2, which is obtained by rotating the reference line L2 by 10 degrees in the clockwise direction at distances from the center O similarly offset to the outer periphery by just a predetermined distance "c" with respect to the points m1, m2, ... on the line reference L1. Similarly to the points n1, n2, n3, ..., points p1, p2, p3, ... of distances from the center O shifted towards the outer periphery by a predetermined distance "c" from the points n1, n2, n3, ... are also shown on the reference line L3, which is obtained by rotating the reference line L2 by 10 degrees in the clockwise direction centered about the center O of the magnetic disc 1'. Curves m1-n1-p1-·, m2-n2-p2-·, and m3-n3-p3-· defined using the curve approximation method between each of the respective points m1, n1, p1, ..., m2, n2, p2, ... and m3, n3, p3, ... on the repeatedly defined reference lines L1, L2, L3, ... are curves based on the external curvature of the magnetic teeth 12n and 12s of the magnetic disc 1.
The predetermined distance "c" (shift amount) is decided by the number of poles and rotation angle of the reference lines L. For example, when both the magnetic cylinder and the magnetic disc has 18 poles, the transmission gear ratio is 1:1, with curves being shifted an amount of shift c (=a+b) every 20 degrees (360/18).

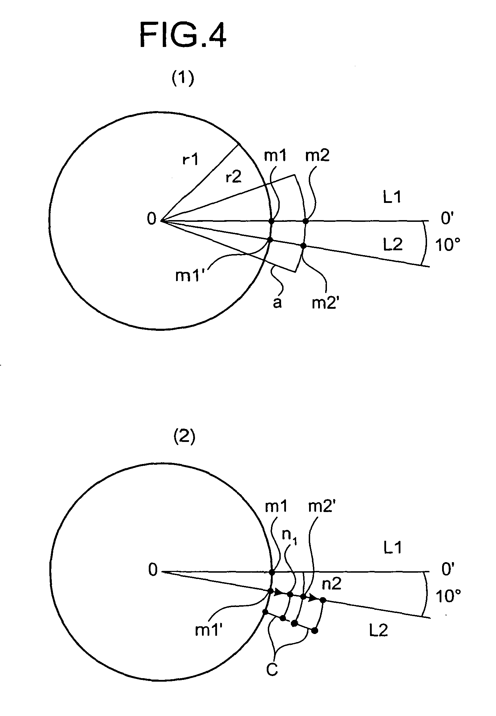

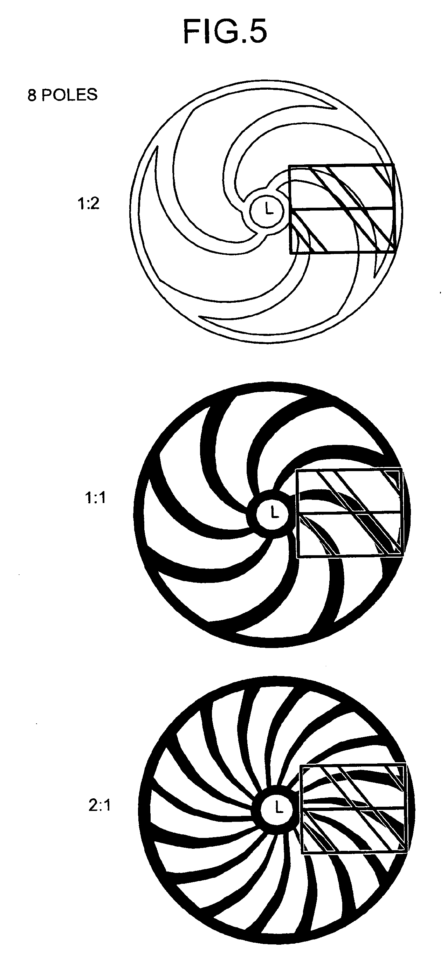

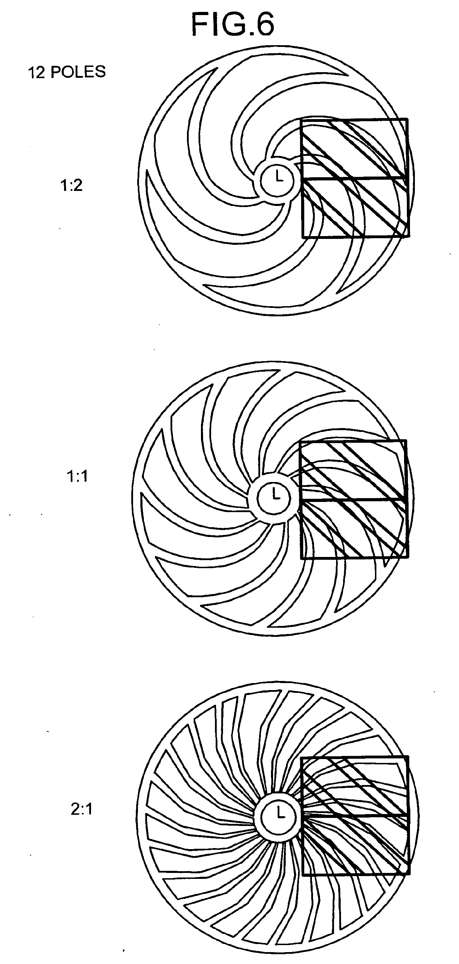

Additional explanation is now given of the shift amount "c" for each point on the reference lines L2, L3, L4, .... Figs. 4(1) and 4(2) are enlarged front views of the vicinity of the center of the magnetic disc 1'. In Fig. 4(1), respective diameters of circles passing through the points m1 and m2 (where the distance between m1 and m2 is "a") on the reference line L1 and the diameter of a circle passing through the points m1 and m2 taking O as a center are taken to be r1 and r2, respectively. Points of intersection with the reference line L2 that is the reference line L1 rotated ten degrees in a clockwise direction based on the radius r1, radius r2, and the center O are taken to be m1' and m2'. The extent of shifting "c" is the extent of moving m1' and m2' towards the outer periphery on the reference line L2 by just the distance "c", and this gives the points n1 and n2. This is shown in Fig. 4(2). An explanation is added only for these two points in the present invention but n3, n4, n5, ... are similarly made, with p1, p2, p3, ... also being made using the above procedure.

An explanation is given for a case where center lines (axial center) O and O' of the cylinder 2 and the disc 1 intersect perpendicularly in Fig. 2; because, such an arrangement is capable of most effectively transmitting power. However, this is by no means limiting and other positions are also possible providing that the axial center O' of the cylinder 2 is parallel with the magnetic surface of the disc 1.
Construction in such a manner that the magnetic teeth length "a" and gap "b" of the cylinder 2 and the disc 1 along the axial center O' are matched when the cylinder 2 is set to positions other than the position shown in Fig. 2. In particular, it is preferable to adjust the magnetic teeth length "a" and gap "b" at the outer periphery side; because, the torque of the magnetic teeth on the outer periphery side is large.

With an orthogonal type magnetic transmission mechanism made from the magnetic disc 1 (or the magnetic disc 1') and the magnetic cylinder 2 made with magnetic teeth formed in the manner explained above, the rotation angle of the magnetic disc 1 and the rotation angle of the magnetic cylinder 2 always rotate at a fixed ratio when, for example, the magnetic disc 1 is rotated in the clockwise direction. Smooth rotation is therefore possible without pulsations in the rotation. The rotation ratio at the magnetic transmission mechanism is decided using a ratio of the number of magnetic teeth of the magnetic disc 1 (number of poles) and the number of poles for one rotation of the outer periphery of the magnetic cylinder 2. It is also possible to appropriately set the rotation ratio of the driven side with respect to the rotational speed of the drive side to be 1:1 or 1:2 at the orthogonal non-contact transmission mechanism by having an appropriate number of poles at any time. Smooth power transmission is similarly-possible when the magnetic cylinder is taken to be the drive side and the magnetic disc is taken to be the driven side. The direction of rotation in this explanation is taken to be the clockwise direction but the same rotation characteristics can also be achieved for rotation in the anti-clockwise direction. In this explanation, the angle by which the reference lines L1, L2, L3, ... are rotated is assumed to be 10 degrees, however, it is also possible to use an angle that is appropriate as necessary. For example, a more precise magnetic teeth curve can be obtained when this angle is smaller than 10 degrees. The drive apparatus utilizes non-contact magnetic meshing of the magnetic cylinder and the magnetic disc. However, the idea that the same magnetic meshing is obtained whatever part is rotating and the idea that magnetic meshing is obtained for a larger surface area are major features. The former feature brings about smooth driving, and the latter feature brings about greater drive force.

Fig. 5 and Fig. 6 show the relationship of the magnetic teeth length "a" and the gap "b" when the number of poles of the magnetic disc 1 and the magnetic cylinder are changed so as to change the transmission gear ratio. Even if the number of poles is changed as shown in the drawings, it is possible to match the magnetic teeth length "a" and gap "b" of the cylinder 2 and the disc 1.

By magnetizing the magnetic disc in shapes of radiating curves, it is possible to drive using the magnetic disc and make the magnetic cylinder driven, or drive using the magnetic cylinder and make the magnetic disc driven. Application to various transmission mechanisms is therefore possible.

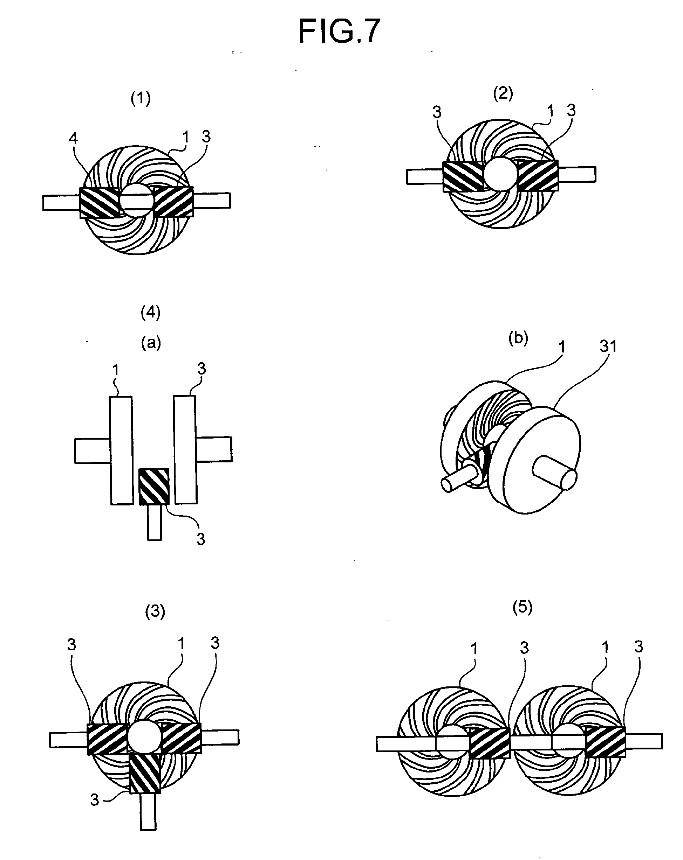

Various example applications are shown in Fig. 7. Fig. 7(1) depicts an example where two magnetic cylinders, a magnetic cylinder 3 and a magnetic cylinder 4, are provided corresponding to one magnetic disc 1. This arrangement produces more transmission torque. Fig. 7(2) depicts an example where the magnetic disc 1 drives and two magnetic cylinders 3 are driven independently by separate axes. Fig. 7(3) depicts an example where three driven magnetic cylinders 3 are provided. Fig. 7(4) depicts a perspective view of a still another example application where the magnetic cylinder 3 drives two magnetic discs fixed to separate axes, the magnetic disc 1 and a magnetic disc 31, having magnetic teeth of a shape opposing the magnetic disc 1 being driven, where Fig. 7(4)(a) is a side view and Fig. 7(4)(b) is a perspective view. Fig. 7(5) is an application example where two magnetic cylinders 3 coupled by one shaft drive, and two magnetic discs 1 are driven. It can be understood that various transmission mechanisms are possible by magnetizing the magnetic disc in radially curving shapes.

Specific embodiments are explained in the following.

<First Embodiment>

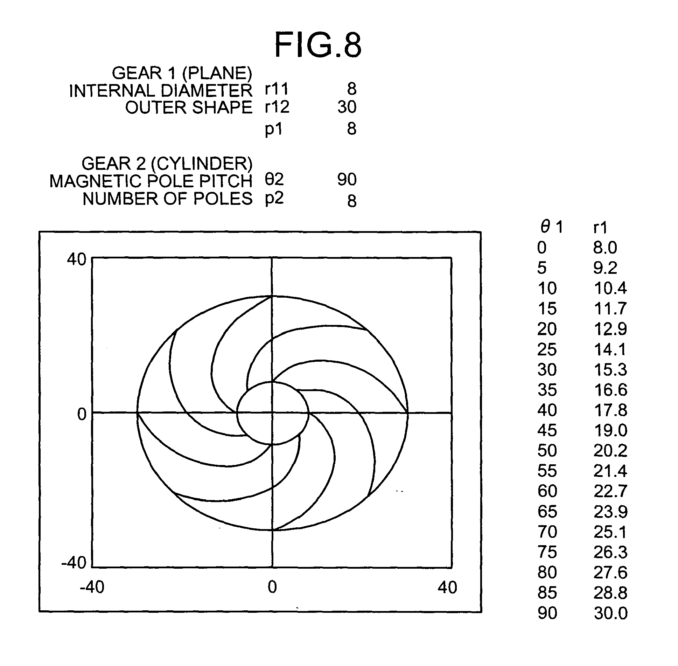

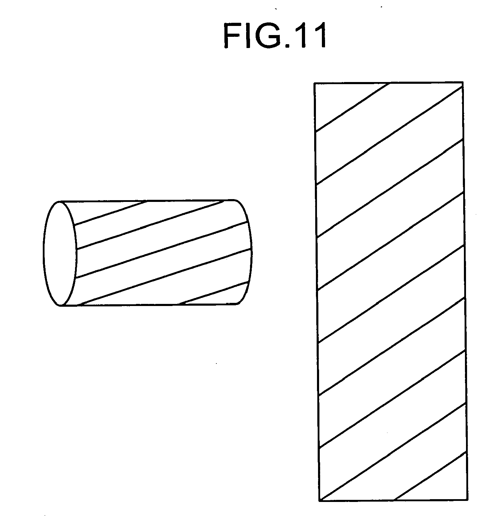

At a permanent magnet cylinder having $p2$ number of magnetic poles at a cylinder surface, magnetic poles appearing at the cylinder surface mesh with a permanent magnet cylinder defined with $p2$ number of spiral curves advancing by a length "h" during rotation through $\theta2/360°$ at a pitch of $360°/p2$. In order to make a magnetic disc (number of poles $p1$) that makes a power transmission mechanism it is necessary to at least have $r1$ and $q1$ where curves defining magnetic poles of the surface satisfy $r1=(r12-r11)\cdot\theta1/\theta2\cdot p1/p2+r11$ (where $h=r12-r11$) (Equation 1). $p1$ of the curves are arranged at gaps of $360°/p1$. This can be obtained by magnetizing regions defining magnetic poles to include these curve groups or by arranging magnets worked into this form. This example is shown in Figs. 8 and 11. The rotation ratio of the transmission mechanism in the case of this example is 1:1.

<Second Embodiment>

It is possible to change the rotation ratio of the transmission mechanism by changing the ratio of the number of poles. A specific example of changing the rotation ratio by changing the number of poles of the magnetic disc and the curves defining the magnetic poles is explained below.

An example of a magnetic disc (number of poles $p1$) that makes a power transmission mechanism engaging with the permanent magnet cylinder shown in Fig. 11 that has eight poles and is spiral-shaped advancing a length "h" ($r12-r11=30-8=22$ mm) during rotation of curves defining magnetic poles appearing at the cylinder surface through $90°/360°$ is shown in Figs. 8, 9, and 10.

Fig. 8 is an example of an arrangement where the number of poles of the magnetic disc is 8. In this arrangement, the rotation ratio is 1:1.

Curves defining the magnetic poles of the magnetic disc are such that $r11=8$ mm, $r12=30$ mm, $\theta2=90°$, and $p1=p2=8$ in Equation 1. Curves defining the magnetic poles are then defined by:

$$r1=(30-8)\cdot\theta1/90\cdot8/8+8=\theta1\cdot22/90+8.$$

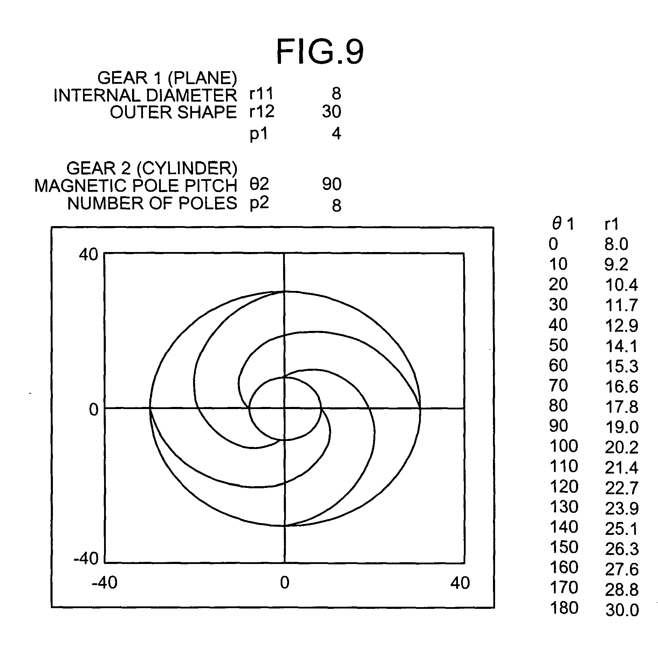

Fig. 9 is an example of an arrangement where the number of poles of the magnetic disc is 4. In this arrangement, it is possible to implement a power transmission mechanism of a rotation ratio of 2:1. Curves defining the magnetic poles of the magnetic disc are such that $r11=8$ mm, $r12=30$ mm, $\theta2=90°$, $p1=4$, and $p2=8$ in Equation 1. Curves defining the magnetic poles are then defined by:

$$r1=(30-8)\cdot \theta 1/90\cdot 4/8+8=\theta 1\cdot 11/90+8.$$

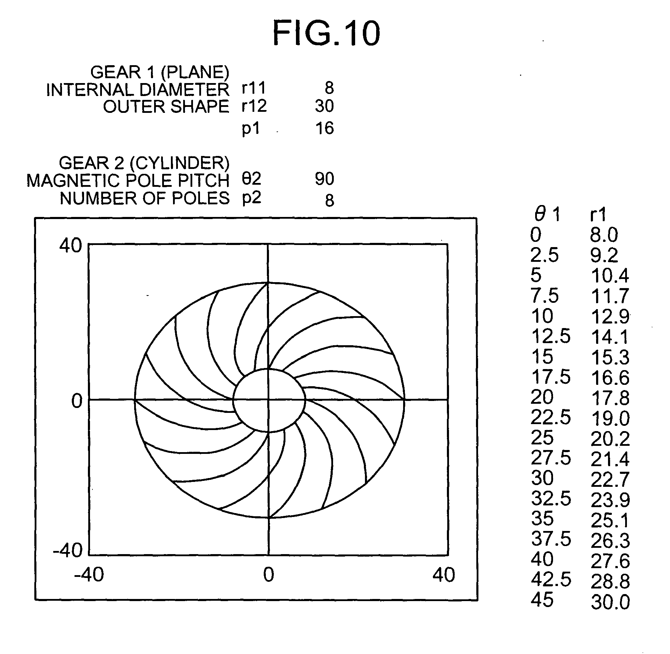

Fig. 10 is an example of an arrangement where the number of poles of the magnetic disc is 16. In this arrangement, it is possible to implement a power transmission mechanism of a rotation ratio of 1:2. Curves defining the magnetic poles of the magnetic disc are such that r11=8 mm, r12=30 mm, θ2=90°, p1=16, and p2=8 in Equation 1. Curves defining the magnetic poles are then defined by:

$$r1=(30-8)\cdot \theta 1/90\cdot 16/8+8=\theta 1\cdot 44/90+8.$$

<Third Embodiment>

Next, a specific example of changing the rotation ratio by changing the number of poles of the permanent magnet disc and the spiral curves defining the magnetic poles is explained below.
Similarly to the example above, Fig. 8 is an example of an arrangement where the number of poles of the magnetic disc is p1=8, internal diameter r11=8 mm, external diameter r12=30 mm, θ2=90°, and p1=p2=8. The curves defining the magnetic poles are defined using:

$$r1=(30-8)\cdot \theta 1/90\cdot 8/8+8=\theta 1\cdot 22/90+8.$$

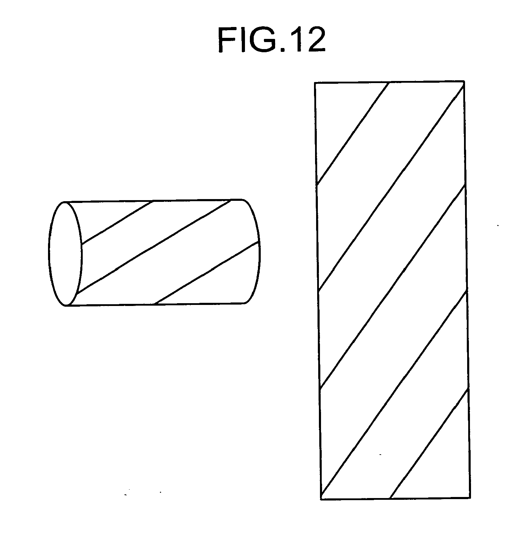

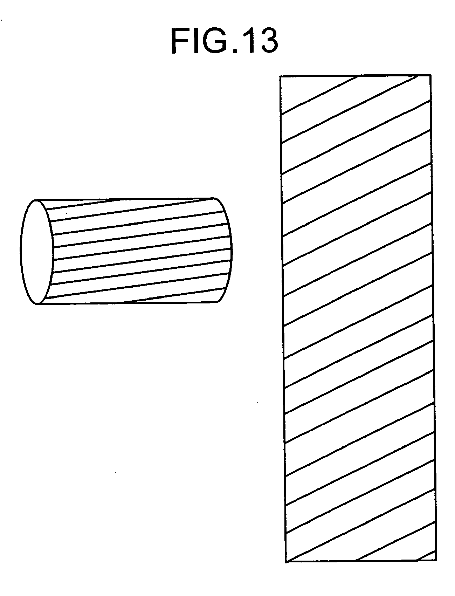

The permanent magnet cylinder has 8 poles, as shown in Fig. 11, and is a permanent magnetic cylinder where curves defining magnetic poles appearing at the cylinder surface are in the shape of spirals advancing a length "h" (r12-r11=30-8=22 mm) when rotated through 90°/360°. In this arrangement, it is possible to implement a power transmission mechanism of a rotation ratio of 1:1.
This is the example of an arrangement of a permanent magnet cylinder where a magnetic disc is used as above, the number of poles of the permanent magnet cylinder shown in Fig. 12 is taken to be 4, and curves defining magnetic poles appearing on the cylinder surface are spiral advancing a length "h" (22 mm) during 180°/360° rotation. In this arrangement, it is possible to implement a power transmission mechanism of a rotation ratio of 1:2.
This is the example of an arrangement of a permanent magnet cylinder where a magnetic disc is used as above, the number of poles of the permanent magnet cylinder shown in Fig. 13 is taken to be 16, and curves defining magnetic poles appearing on the cylinder surface are of a spiral shape advancing a length "h" (22 mm) during 45°/360° rotation. In this arrangement, it is possible to implement a power transmission mechanism of a rotation ratio of 2:1.

BRIEF DESCRIPTION OF DRAWINGS

[Fig. 1] Fig. 1(1) is a front view, Fig. 1(2) is a side view, and Fig. 1(3) is a perspective view of a non-contact orthogonal power transmission mechanism of a first embodiment of the present invention;
[Fig. 2] Fig. 2 is an outline view showing magnetic meshing;
[Fig. 3] Fig. 3 is an outline view for explaining a magnetic teeth producing method for a magnetic disc based on this embodiment;
[Fig. 4] Figs. 4(1) and 4(2) are enlarged front views of a center part of the magnetic disc based on this embodiment;
[Fig. 5] Fig. 5 is an view for explaining the relationship between magnetic tooth length "a" and a gap "b" of a magnetic cylinder 2 and a magnetic disc 1 for cases where the magnetic cylinder 2 has 8 poles and the magnetic disc 1 has 4 poles, 8 poles, and 16 poles;
[Fig. 6] Fig. 6 is another view for explaining the relationship between magnetic tooth length "a" and the gap "b" of the magnetic cylinder 2 and the magnetic disc 1 for cases where the magnetic cylinder 2 has 8 poles and the magnetic disc 1 has 4 poles, 8 poles, and 16 poles;
[Fig. 7] Figs. 7(1) to 7(5) are front views, side views, or perspective views of various example applications of the present invention;
[Fig. 8] Fig. 8 is a view for explaining an embodiment of the present invention;
[Fig. 9] Fig. 9 is another view for explaining an embodiment of the present invention;

[Fig. 10] Fig. 10 is still another view for explaining an embodiment of the present invention;
[Fig. 11] Fig. 11 is still another view for explaining an embodiment of the present invention;
[Fig. 12] Fig. 12 is still another view for explaining an embodiment of the present invention;
[Fig. 13] Fig. 13 is still another view for explaining an embodiment of the present invention; and
[Fig. 14] Fig. 14 is a structural view of a conventional non-contact power transmission mechanism.

EXPLANATIONS OF LETTERS OR NUMERALS

| 1, 1' | magnetic disc |
| 11 | yoke disc |
| 12, 12' | permanent magnet cylinder |
| 12s, 12s' | magnetic teeth |
| 12n, 12n' | magnetic teeth |
| 13 | rotatable shaft |
| 2 | magnetic cylinder |
| 21 | yoke cylinder |
| 22 | magnetic cylinder |
| 22s | magnetic teeth |
| 22n | magnetic teeth |
| 23 | rotatable shaft |
| 3, 4 | magnetic cylinder |
| 31 | magnetic disc |
| 101 | first magnetic gear |
| 102 | second magnetic gear |
| 103, 106 | rotatable shaft |
| 104, 104 | magnets for second magnetic gear |
| 107a, 107b, 108a, 108b | magnets for second magnetic gear |

## Claims

1. A power transmission mechanism comprising:

    a rotatable magnetic disc having a first magnetic surface formed with radially curving magnetic bands magnetized alternately as N poles and S poles at one side; and
    a rotatable magnetic cylinder having a second magnetic surface formed with spiral-shaped magnetic bands magnetized alternately as N poles and S poles at an outer periphery,
    wherein a predetermined gap is maintained between the magnetic cylinder and the magnetic surface of the magnetic disc, and an axial center of the magnetic cylinder is substantially parallel with the first magnetic surface.

2. The power transmission mechanism according to claim 1,
    wherein a position and a width along the axial center of the magnetic cylinder of the magnetic bands of the first magnetic surface and the magnetic bands of the second magnetic surface are substantially same.

3. The power transmission mechanism according to claim 1,
    wherein the magnetic disc and the magnetic cylinder are arranged so that the axial center of the magnetic cylinder and an axial center of the magnetic disc are orthogonal.

4. The power transmission mechanism according to claim 1,
    wherein number of magnetic bands of the first magnetic surface and number of magnetic bands of the second magnetic surface are the equal.

5. The power transmission mechanism according to claim 1,
    wherein a ratio of number of magnetic bands of the first magnetic surface and number of magnetic bands of the second magnetic surface is a whole number.

6. The power transmission mechanism according to claim 1, comprising a plurality of the magnetic discs and one magnetic cylinder.

7. The power transmission mechanism according to claim 1, comprising one magnetic disc and a plurality of the magnetic cylinders.

8. The power transmission mechanism according to claim 1, comprising a plurality of the magnetic discs and a plurality of the magnetic cylinders.

9. The power transmission mechanism according to any one of claims 7 or 8, wherein the magnetic cylinders are fixed to one rotatable shaft.

10. A power transmission mechanism comprising:

a magnetic cylinder having p2 number of magnetic poles at a cylinder surface, with the magnetic poles appearing at the cylinder surface being defined by a curve group of p2 spiral curves advancing a length "h" during rotation through θ2/360° being spaced at 360°/p2; and
a magnetic disc having p1 number of magnetic poles at a disc surface,
wherein the magnetic poles appearing at the disc surface in a range from a radius r11 to a radius r12 are arranged facing each other at predetermined intervals of 360°/p1 so that, with the magnetic disc defined by a curve group of p1 curves satisfying r1 and θ1 expressed by Equation 1, axes of rotation become substantially orthogonal.

```
(Equation 1) r1=(r12-r11)·θ1/θ2·p1/p2+r11      (where
h=r12-r11)
```

# FIG.1

(1)

(2)

(3)

# FIG.2

# FIG.3

# FIG.4

(1)

(2)

# FIG.5

8 POLES

1:2

1:1

2:1

# FIG.6

12 POLES

1:2

1:1

2:1

# FIG.7

# FIG.8

GEAR 1 (PLANE)
INTERNAL DIAMETER r11    8
OUTER SHAPE r12    30
p1    8

GEAR 2 (CYLINDER)
MAGNETIC POLE PITCH θ2    90
NUMBER OF POLES p2    8

| θ1 | r1 |
|----|------|
| 0 | 8.0 |
| 5 | 9.2 |
| 10 | 10.4 |
| 15 | 11.7 |
| 20 | 12.9 |
| 25 | 14.1 |
| 30 | 15.3 |
| 35 | 16.6 |
| 40 | 17.8 |
| 45 | 19.0 |
| 50 | 20.2 |
| 55 | 21.4 |
| 60 | 22.7 |
| 65 | 23.9 |
| 70 | 25.1 |
| 75 | 26.3 |
| 80 | 27.6 |
| 85 | 28.8 |
| 90 | 30.0 |

# FIG.9

GEAR 1 (PLANE)
INTERNAL DIAMETER r11    8
OUTER SHAPE r12    30
p1    4

GEAR 2 (CYLINDER)
MAGNETIC POLE PITCH θ2    90
NUMBER OF POLES p2    8

| $\theta 1$ | r1 |
|---|---|
| 0 | 8.0 |
| 10 | 9.2 |
| 20 | 10.4 |
| 30 | 11.7 |
| 40 | 12.9 |
| 50 | 14.1 |
| 60 | 15.3 |
| 70 | 16.6 |
| 80 | 17.8 |
| 90 | 19.0 |
| 100 | 20.2 |
| 110 | 21.4 |
| 120 | 22.7 |
| 130 | 23.9 |
| 140 | 25.1 |
| 150 | 26.3 |
| 160 | 27.6 |
| 170 | 28.8 |
| 180 | 30.0 |

# FIG.10

GEAR 1 (PLANE)
INTERNAL DIAMETER r11      8
OUTER SHAPE r12      30
p1   .   16

GEAR 2 (CYLINDER)
MAGNETIC POLE PITCH θ2      90
NUMBER OF POLES p2      8

| $\theta 1$ | r1 |
|---|---|
| 0 | 8.0 |
| 2.5 | 9.2 |
| 5 | 10.4 |
| 7.5 | 11.7 |
| 10 | 12.9 |
| 12.5 | 14.1 |
| 15 | 15.3 |
| 17.5 | 16.6 |
| 20 | 17.8 |
| 22.5 | 19.0 |
| 25 | 20.2 |
| 27.5 | 21.4 |
| 30 | 22.7 |
| 32.5 | 23.9 |
| 35 | 25.1 |
| 37.5 | 26.3 |
| 40 | 27.6 |
| 42.5 | 28.8 |
| 45 | 30.0 |

# FIG.11

# FIG.12

# FIG.13

# FIG.14

**INTERNATIONAL SEARCH REPORT**

| International application No. |
| --- |
| PCT/JP2006/313732 |

| A. CLASSIFICATION OF SUBJECT MATTER |
| --- |
| *F16H49/00*(2006.01)i |

According to International Patent Classification (IPC) or to both national classification and IPC

| B. FIELDS SEARCHED |
| --- |

| Minimum documentation searched (classification system followed by classification symbols) |
| --- |
| F16H49/00 |

Documentation searched other than minimum documentation to the extent that such documents are included in the fields searched

| Jitsuyo Shinan Koho | 1922-1996 | Jitsuyo Shinan Toroku Koho | 1996-2006 |
| --- | --- | --- | --- |
| Kokai Jitsuyo Shinan Koho | 1971-2006 | Toroku Jitsuyo Shinan Koho | 1994-2006 |

Electronic data base consulted during the international search (name of data base and, where practicable, search terms used)

| C. DOCUMENTS CONSIDERED TO BE RELEVANT | | |
| --- | --- | --- |
| Category* | Citation of document, with indication, where appropriate, of the relevant passages | Relevant to claim No. |
| Y | JP 8-336274 A  (Yatsu Kobo Kabushiki Kaisha),<br>17 December, 1996 (17.12.96),<br>Figs. 1, 4<br>(Family: none) | 1-10 |
| Y | JP 2003-305289 A  (Sunstar Precision Co., Ltd.),<br>28 October, 2003 (28.10.03),<br>Par. Nos. [0027] to [0028]; Fig. 3<br>& US 2003/172860 A1    & KR 2003/073654 A<br>& DE 13010362 A1 | 1-10 |
| P,X<br>Y | JP 2006-129664 A  (Maruyasu Kikai Kabushiki Kaisha),<br>18 May, 2006 (18.05.06),<br>Figs. 4, 5<br>& US 2006/0091748 A1    & CN 1770607 A | 1-9<br>10 |

| ☐ Further documents are listed in the continuation of Box C. | ☐ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered   to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 13 October, 2006 (13.10.06) | 24 October, 2006 (24.10.06) |

| Name and mailing address of the ISA/ | Authorized officer |
| --- | --- |
| Japanese Patent Office | |
| Facsimile No. | Telephone No. |

Form PCT/ISA/210 (second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**